# FASCICULE DE BREVET EUROPEEN

(11) **EP 3 127 297 B1**
(45) Date de publication et mention de la délivrance du brevet: **04.09.2024**
(21) Numéro de dépôt: 15717571.2
(22) Date de dépôt: 27.03.2015
(51) Int. Cl.: H04L 12/46, H04L 65/10

(54) **PROCEDE DE DETECTION D'UNE USURPATION D'IDENTITE APPARTENANT A UN DOMAINE**
VERFAHREN ZUR ERKENNUNG EINER TÄUSCHUNG EINER IDENTITÄT EINER DOMÄNE
METHOD OF DETECTING A SPOOFING OF IDENTITY BELONGING TO A DOMAIN

(30) Priorité: 31.03.2014 FR 1452787
(43) Date de publication de la demande: 08.02.2017
(73) Titulaire: Orange, 92130 Issy-les-Moulineaux (FR)
(72) Inventeur: BOUVET, Bertrand, F-22700 Perros Guirec (FR)
(86) Numéro de dépôt international: PCT/FR2015/050797
(87) Numéro de publication internationale: WO 2015/150674

(56) Documents cités:
- US-A1- 2008 159 501
- US-A1- 2011 138 462
- US-A1- 2011 222 481

## Description

La présente invention se situe dans le domaine des télécommunications et concerne particulièrement un procédé de détection d'usurpation d'identité lors de l'établissement d'une communication.

La plupart des fournisseurs de services téléphoniques offrent à leurs abonnés un service de présentation du numéro d'appel. Ainsi, lorsqu'un appel est présenté sur le terminal d'un abonné, celui-ci peut connaître le numéro de l'appelant. Cette information est souvent utilisée par le terminal pour en déduire le nom de l'appelant à partir d'une recherche dans un carnet d'adresses.

Le document US2011222481A1 concerne un système de communication fournissant un service multimédia qui informe un terminal appelant qu'une communication envoyée du terminal appelant à un terminal appelé n'est pas souhaitée par le terminal appelé. Typiquement, le terminal appelant est connecté à un réseau de communication côté appelant, et le terminal appelé est connecté à un réseau de communication côté appelé ; le réseau de communication côté appelé comprend un dispositif de réception de demande d'accès qui reçoit une demande d'accès envoyée par le terminal appelant ; un dispositif de détermination d'annulation de demande d'accès qui détermine si oui ou non la demande d'accès reçue est annulée ; et un dispositif d'envoi d'avis d'annulation de demande d'accès qui envoie un avis d'annulation de demande d'accès lorsque la demande d'accès est annulée; et le réseau de communication côté appelant comprend un dispositif de communication d'informations de destinataire qui communique des informations de destinataire au terminal appelant sur la base de l'avis d'annulation de demande d'accès, où les informations de destinataire sont des informations d'un destinataire auquel accéder afin de retirer l'annulation de l'accès demande.

Avec le développement d'Internet, on assiste aujourd'hui à une forte augmentation du nombre de cas d'usurpation d'identité. Les cas d'usurpation de numéros de téléphone ou d'adresses email sont particulièrement fréquents et grandement facilités par les technologies actuelles. Par exemple, afin de contourner le filtrage des numéros masqués et pour inciter les correspondants à répondre, certains centres d'appels peu scrupuleux positionnent dans le champ numéro appelant le numéro d'un tiers. Ces centres d'appels positionnent parfois dans le champ numéro appelant le numéro d'un abonné géographiquement proche de la personne à joindre, de façon à ce que le numéro affiché lui semble familier, l'incitant ainsi à répondre. Le numéro ainsi positionné peut être changé régulièrement de façon à ne pas éveiller de soupçon chez les opérateurs.

Dans d'autres cas, l'usurpateur envoie à sa victime un message en se faisant passer pour un organisme de confiance, par exemple un organisme public ou privé bien connu de façon à inciter la victime à lui révéler des informations personnelles, comme des identifiants de connexion ou un numéro de carte bancaire.

Il existe également des services en ligne payants qui permettent d'établir une communication vers un correspondant tout en présentant un numéro de téléphone librement choisi par l'appelant.

Les services de communication sur IP ne disposent pas de critères physiques permettant de certifier le numéro appelant présenté par un abonné comme c'est le cas avec une ligne RTC (Réseau Téléphonique Commuté) ou RNIS (Réseau Numérique à Intégration de Services). Ce phénomène va continuer à prendre de l'ampleur car il est très simple pour des personnes peu scrupuleuses de configurer n'importe quel numéro d'appelant lors d'une communication VolP. En effet, de plus en plus de solutions de communication permettent aux utilisateurs de configurer eux même leur numéro de téléphone sans qu'aucun contrôle ne soit réalisé. Par exemple, il existe des solutions de communication de type WebRTC avec interconnexion avec le réseau RTC ou IMS (IP Multimedia Subsystem), qui permettent de saisir des numéros d'appelants sans réelle possibilité de contrôle.

Il existe des solutions permettant de vérifier la validité d'un numéro appelant positionné par un PBX (Private Branch Exchange) raccordé à un réseau RTC, comme par exemple la solution décrite dans la demande de brevet US5953399 A. Il s'agit ici de vérifier que le numéro positionné dans la signalisation d'appel par le PBX correspond bien à un numéro associé à la ligne RTC. La demande de brevet US 20070127658 A1 propose également une solution basée sur une comparaison du numéro appelant inséré dans la signalisation et le numéro associé à la ligne RTC correspondante. Bien que ces solutions soient efficaces dans un contexte d'interconnexion avec un réseau RTC, elles ne sont d'aucune utilité pour limiter la fraude dans un système tout IP (Internet Protocol).

L'usurpation d'un numéro de téléphone pouvant être lourde de conséquences pour l'abonné dont le numéro est usurpé, il existe un réel besoin pour une solution visant à prémunir les abonnés de ces pratiques, particulièrement dans le cadre de communications sur IP.

La présente invention améliore la situation. La présente invention est définie par l'objet des revendications indépendantes 1, 2, 14 et 15. D'autres modes de réalisation détaillés sont définis dans les revendications dépendantes.

À cet effet, l'invention concerne selon un premier aspect un procédé de contrôle, par un équipement de gestion d'un premier domaine de télécommunication, de l'authenticité d'au moins une donnée de mise en relation relative à l'initiateur d'une communication et indiquée dans un message d'établissement de la communication en provenance d'un second domaine de télécommunication et à destination du premier domaine de télécommunication. Le procédé est tel qu'il comporte, à la réception du message par l'équipement de gestion, des étapes d'extraction de la au moins une donnée de mise en relation à partir du message ; de recherche de la au moins une donnée de mise en relation dans au moins une base de données des données de mise en relation associées au premier domaine, et de rejet de la communication lorsqu'une occurrence de la au moins une donnée de mise en relation est trouvée dans la base de données.

Un domaine de de télécommunication tel qu'on l'entend dans ce document est une entité logique sous la responsabilité d'un opérateur, à laquelle sont associés des utilisateurs ou abonnés du domaine. Par exemple, un domaine de télécommunication peut être un réseau IMS d'un opérateur offrant des services de communication à ses abonnés. La notion de domaine de télécommunication au sens de la présente invention peut également correspondre à un domaine internet par exemple. Différents domaines de communication peuvent être interconnectés grâce à des équipements et des liens d'interconnexion de façon à permettre l'établissement de communications d'un domaine à l'autre.

Une communication initiée par un abonné du premier domaine vers un autre abonné de ce même domaine ne transite pas par le lien d'interconnexion. C'est pourquoi, lorsque le message arrive dans le premier domaine de télécommunication par l'intermédiaire d'une interconnexion avec un réseau tiers, l'équipement de gestion vérifie que la donnée de mise en relation relative à l'appelant indiquée dans le message ne désigne pas un abonné du premier domaine car si tel est le cas, la donnée de mise en relation relative à l'appelant est invalide. L'opérateur du premier domaine de télécommunication peut ainsi s'assurer qu'aucun numéro de ses abonnés n'est usurpé lors d'un appel en provenance d'un réseau de télécommunication tiers.

Selon un mode particulier de réalisation, le procédé est tel qu'il comporte en outre des étapes de recherche de la au moins une donnée de mise en relation dans au moins une seconde base de données des données de mise en relation associées au second domaine, et de rejet de la communication lorsqu'une occurrence de la au moins une donnée de mise en relation n'est pas trouvée dans la seconde base de données.

Lorsque la donnée de mise en relation relative à l'appelant indiquée dans le message ne correspond pas à un abonné du domaine dont elle est originaire, la donnée de mise en relation est invalide. Le procédé selon l'invention permet ainsi de détecter une éventuelle usurpation d'une donnée de mise en relation relative à l'appelant.

Selon une réalisation particulière, le procédé est tel que la donnée de mise en relation relative à l'appelant comporte au moins une donnée d'un type compris dans l'ensemble constitué par les types suivants : un numéro de téléphone, une adresse de courrier électronique, une adresse de contact sur Internet, ou un identifiant de communication.

Le procédé est ainsi apte à détecter l'usurpation d'un numéro de téléphone, par exemple lors de l'initiation d'une communication téléphonique, l'envoi d'un SMS (Short Message Service) ou d'un MMS (Multimédia Message Service). Le procédé est également apte à détecter l'utilisation d'une adresse email invalide lors de l'envoi d'un courriel ou encore de détecter une usurpation d'identité lors d'une communication sur internet, par exemple lors de l'utilisation d'une messagerie associée à un réseau social. L'identifiant de communication peut être l'adresse MAC (Media Access Control ) d'un objet communiquant, un numéro IMEI (International Mobile Equipment Identity) ou encore un code barre par exemple.

L'invention concerne également un dispositif de contrôle de l'authenticité d'au moins une donnée de mise en relation relative à l'initiateur d'une communication et indiquée dans un message d'établissement de la communication à destination d'un premier domaine de télécommunication et en provenance d'un second domaine de télécommunication. Le dispositif est tel qu'il comporte des moyens de réception du message d'établissement de la communication, d'extraction de la au moins une donnée de mise en relation à partir du message ; de recherche de la au moins une donnée de mise en relation dans au moins une base de données des données de mise en relation associées au premier domaine, et de rejet de la communication lorsqu'une occurrence de la au moins une donnée de mise en relation est trouvée dans la base de données.

L'invention concerne aussi un serveur comprenant un dispositif de contrôle de l'authenticité d'au moins une donnée de mise en relation relative à l'appelant tel que décrit ci-dessus.

L'invention concerne également un programme d'ordinateur comportant les instructions pour l'exécution du procédé de contrôle de l'authenticité d'au moins une donnée de mise en relation relative à un appelant tel que décrit ci-dessus, lorsque le programme est exécuté par un processeur.

Enfin, l'invention concerne un support d'informations lisible par un ordinateur sur lequel est enregistré un programme d'ordinateur comprenant des instructions pour l'exécution des étapes du procédé de contrôle de l'authenticité d'au moins une donnée de mise en relation tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les serveurs, dispositifs et programmes présentent des avantages analogues à ceux du procédé correspondant décrit ci-dessus.

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre de manière simplifiée une architecture réseau adaptée pour la mise en oeuvre de l'invention selon un mode de réalisation particulier;
- La figure 2 illustre les principales étapes du procédé de contrôle de l'authenticité d'une donnée de mise en relation selon un mode de réalisation de la présente invention ;
- La figure 3 illustre un dispositif mettant en oeuvre le procédé de contrôle de l'authenticité d'une donnée de mise en relation selon un mode particulier de réalisation de l'invention;

La description suivante ainsi que les figures associées sont données à titre d'exemple non limitatif d'un mode de réalisation particulier de l'invention.

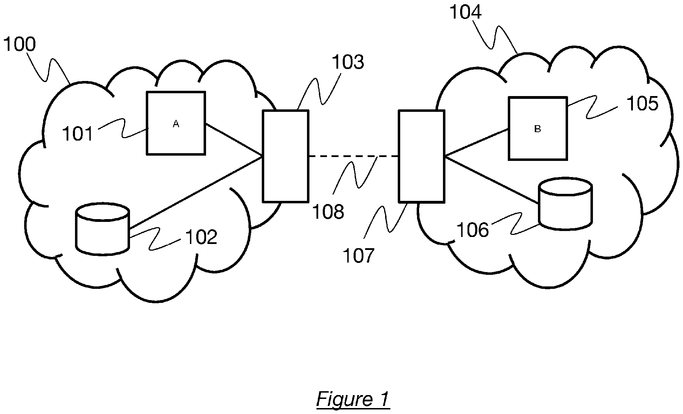

La figure 1 illustre un exemple d'architecture réseau adaptée pour la mise en oeuvre du procédé de contrôle de l'authenticité d'une donnée de mise en relation selon un mode de réalisation de la présente invention ; toutefois, il n'échappera pas à l'homme du métier que des composants additionnels peuvent être présents ou que certains composants peuvent être regroupés dans une même entité ou à l'inverse répartis sur plusieurs entités. L'invention est ici décrite dans le cadre d'un réseau de télécommunication de type IMS (IP Multimédia Subsystem) mais peut s'appliquer à tout type de réseaux et services de communication, comme par exemple un réseau RTC. Selon un autre mode de réalisation de l'invention, le procédé peut s'appliquer à des services de messageries, comme par exemple une messagerie de type email, SMS (Short Message Service) ou encore MMS (Multimedia Message Service).

La figure 1 représente un premier réseau de télécommunication 100, par exemple un réseau de type IMS, définissant un premier domaine de télécommunication. Ce réseau IMS comporte un équipement de gestion 103 mettant en oeuvre le procédé de contrôle de l'authenticité, une base de données 102 dans laquelle sont renseignés les identifiants d'appels des abonnés au réseau de télécommunication 100 et un terminal 101 associé à un abonné A, qui peut être par exemple un téléphone mobile enregistré sur le réseau IMS 100. L'équipement de gestion est adapté pour intercepter la signalisation des appels en provenance d'un réseau ou d'un domaine tiers, comme par exemple le réseau 104, relié au réseau 100 par l'intermédiaire d'une interconnexion 108. Selon un mode particulier de réalisation, l'équipement de gestion peut être un commutateur d'un réseau de type RTC (Réseau Téléphonique Commuté) ou encore un MTA (Mail Transport Agent) dans le cas d'une messagerie de type email. Dans le cas d'un réseau de type IMS, l'équipement de gestion 103 peut être un I-CSCF (Interrogating - Call Session Control Function), un I-SBC (Interconnection - Session Border Controller) ou encore par exemple un Call Server SIP dont le rôle est d'assurer un interfonctionnement protocolaire avec des équipements mettant en oeuvre d'autres technologies de communication (H.323, ISUP, ...) et d'interroger par exemple un serveur de portabilité. La base de données 102 est par exemple un équipement de type HSS (Home Subscriber Server) ou un serveur de portabilité ou tout autre base de données permettant de tester l'appartenance d'une donnée de mise en relation à un domaine de télécommunication. Les utilisateurs référencés dans la base de donnée 102 appartiennent ainsi à un même domaine de télécommunication dont la gestion est sous la responsabilité de l'opérateur du réseau 100. L'opérateur du réseau 100 peut ainsi attribuer à ses abonnés une donnée de mise en relation, comme par exemple un identifiant d'appel téléphonique, une adresse email, une adresse de contact sur Internet (URL, URI, identifiant sur un réseau social, ...) ou encore n'importe quel identifiant de communication, comme par exemple une adresse MAC ou un code barre. Cette donnée de mise en relation appartient à un ensemble de données de mise en relation qui a été attribué à l'opérateur pour ses abonnés. Par exemple, cet ensemble peut correspondre à une ou plusieurs tranches de numéros de téléphone ou encore un ou plusieurs domaines Internet.

La figure 1 représente également un second réseau de télécommunication 104 définissant un second domaine de télécommunication, par exemple un réseau de type IMS. Ce réseau IMS comporte un équipement de gestion 107 mettant en oeuvre le procédé de contrôle de l'authenticité, une base de données 106 dans laquelle sont renseignés les identifiants d'appels des abonnés au réseau de télécommunication 104, et un terminal 105 associé à un abonné B, qui peut être par exemple un téléphone mobile enregistré sur le réseau IMS 104. L'équipement de gestion est adapté pour intercepter la signalisation des appels en provenance d'un réseau ou d'un domaine tiers, comme par exemple le réseau 100, relié au réseau 104 par l'intermédiaire d'une interconnexion 108. Selon un mode particulier de réalisation, l'équipement de gestion peut être un commutateur d'un réseau de type RTC ou encore un MTA (Mail Transport Agent) dans le cas d'une messagerie de type email. Dans le cas d'un réseau de type IMS, l'équipement de gestion 107 peut être un I-CSCF (Interrogating - Call Session Control Function), un I-SBC (Interconnection - Session Border Controller) ou encore par exemple un Call Server SIP dont le rôle est d'assurer un interfonctionnement protocolaire (H.323, ISUP, ...) et d'interroger par exemple un serveur de portabilité. D'une manière générale, le procédé peut être mis en oeuvre sur tout autre équipement adapté pour intercepter la signalisation des appels en provenance d'un réseau tiers et pour consulter une base de données des abonnés du domaine. La base de données 106 est par exemple un équipement de type HSS (Home Subscriber Server) ou un serveur de portabilité ou tout autre base de données permettant de vérifier l'appartenance d'une donnée de mise en relation à un domaine de télécommunication. Les utilisateurs référencés dans la base de données 106 appartiennent ainsi à un même domaine de télécommunication dont la gestion est sous la responsabilité de l'opérateur du réseau 104. L'opérateur du réseau 104 peut ainsi attribuer à ses abonnés une donnée de mise en relation, comme par exemple un identifiant d'appel téléphonique, une adresse email, un adresse de contact sur Internet (URL, URI, identifiant sur un réseau social, ...). Cette donnée de mise en relation appartient à un ensemble de données de mise en relation qui a été attribué à l'opérateur pour ses abonnés. Par exemple, cet ensemble peut correspondre à une ou plusieurs tranches de numéros de téléphone ou encore un ou plusieurs domaines Internet.

Les réseaux 100 et 104 sont interconnectés par l'intermédiaire d'une liaison 108. Cette architecture est ainsi adaptée pour permettre l'établissement d'une communication initiée par le terminal 101 à destination du terminal 105, comme par exemple une communication audio, vidéo ou un échange de message. Le terminal 101 peut être par exemple un terminal VolP adapté pour placer un appel à destination du terminal 105 par l'intermédiaire des réseaux 100 et 104 en empruntant la liaison 108. Lorsque le terminal 101 initie une communication, par exemple un appel téléphonique à destination du terminal 105, les données de signalisation d'appel transitent pas les équipements de gestion 103 et 107. Lorsque l'équipement 107 reçoit un message d'initiation d'appel, comme par exemple un message SIP (Session Initiation Protocole) de type INVITE, l'équipement de gestion 107 interroge de façon classique la base de données 106 afin de s'assurer que le destinataire de la communication appartient au domaine de télécommunication du réseau 104 et de localiser le terminal. Si le destinataire de l'appel appartient effectivement au réseau 104, et que l'appel émane d'un autre domaine de télécommunication, comme par exemple du réseau 100, l'équipement 107 va mettre en oeuvre le procédé selon l'invention afin de déterminer la validité du numéro appelant indiqué dans le message de signalisation. Par exemple, dans le cas d'une communication SIP, l'équipement 107 va vérifier la validité du champ « from » et/ou du champ « P-Asserted-ID » présents dans le message INVITE initiant la communication. Pour cela, l'équipement de gestion 107 consulte, selon un mode de réalisation particulier, la base de données 106 afin de déterminer l'appartenance du numéro appelant au réseau 104. Ainsi, si le numéro d'appelant indiqué dans un message en provenance du domaine de télécommunication 100 est présent dans la base de données 106 des utilisateurs du réseau 104, c'est que le numéro d'appelant est invalide. Selon un autre mode de réalisation, l'équipement 107 peut interroger la base de données 102 du réseau 100 afin de confirmer l'appartenance de l'identifiant d'appel présenté au domaine d'origine de l'appel.

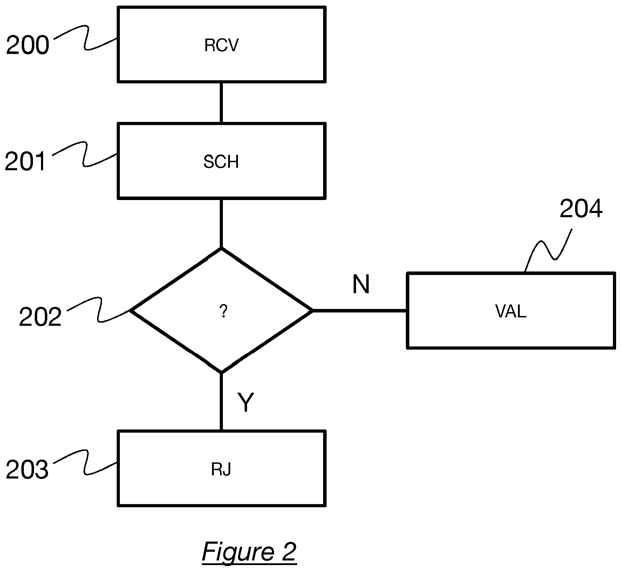

La figure 2 illustre sous la forme d'un diagramme les principales étapes du procédé selon un mode particulier de réalisation de l'invention. Afin d'illustrer le procédé, la description suivante prend l'exemple d'un appel initié par le terminal 101 de la figure 1 à destination du terminal 105 qui appartient au réseau 104. L'équipement 107 implémente le procédé de contrôle selon l'invention et est adapté à intercepter la signalisation des communications provenant d'un réseau tiers et à interroger une base de données des abonnés du domaine, par exemple la base de données 106 de la figure 1.

Lors d'une première étape 200, un message d'établissement d'une communication en provenance d'un premier domaine de télécommunication, comme par exemple le réseau 100 de la figure 1, est reçu par un équipement de gestion d'un second domaine de télécommunication, par exemple le réseau 104 de la figure 1. Le message reçu peut être par exemple un message de signalisation SIP, H323, SS7, GSM ou encore un SMS, MMS ou email. Le message est ensuite analysé de façon à en extraire une donnée de mise en relation associée à l'émetteur du message. Il peut s'agir par exemple du contenu du champ « from » ou « P-Asserted-Id » d'un message SIP pour un appel téléphonique, visiophonique, SMS... , du champ « from » d'un email. La donnée de mise en relation obtenue à partir du message peut être par exemple une URL, un numéro de téléphone, une adresse email ou encore par exemple une SIP URI (Uniform Resource Identifier).

Lors d'une étape 201, l'équipement de gestion 107 effectue une recherche dans une base de données des abonnés du domaine de télécommunication du destinataire à partir de la donnée de mise en relation extraite du message. Dans le cas d'un réseau IMS, l'équipement de gestion peut par exemple émettre un message « LIR » (Location Information Request) selon le protocole « Diameter » (RFC 3588) pour interroger le serveur HSS (Home Subscriber Server) du domaine sur la base du numéro appelant contenu dans le champ « from » et/ou « P-Asserted-ld » du message SIP INVITE reçu. En réponse à ce message, le serveur HSS envoie une réponse « Diameter LIA » (Location Information Answer) contenant un code d'erreur lorsque le numéro appelant n'a pas été trouvé dans la base de données.

À l'étape 202, l'équipement de gestion interprète la réponse du HSS. Lorsque le message « Diameter LIA » contient un code d'erreur indiquant que le numéro appelant recherché n'a pas été trouvé, c'est que le numéro appelant indiqué dans le message d'initiation de communication ne résulte pas de l'usurpation d'un numéro attribué à un abonné du domaine de télécommunication. Si en revanche la réponse « Diameter LIA » indique qu'un abonné a bien été trouvé dans la base de données associée au serveur HSS, c'est que le numéro appelant indiqué dans le message d'initiation de communication est usurpé. En effet, le message d'initiation de communication ne peut pas à la fois provenir d'un domaine tiers par l'intermédiaire d'une interconnexion et désigner un appelant faisant partie du domaine de recherche. Une telle contradiction démontre l'invalidité du numéro appelant présenté.

À l'étape 203, lorsque le numéro appelant est invalide, l'équipement de gestion rejette l'appel en envoyant pas exemple à l'émetteur un code d'erreur. Par exemple, en cas d'utilisation du protocole SIP, la réponse peut être « 404 Not Found ». Selon un mode particulier de réalisation, une annonce vocale peut être jouée à l'appelant lui indiquant que l'appel ne peut aboutir car le numéro appelant est invalide. L'annonce peut être jouée en utilisant la fonctionnalité SIP dite « early média » permettant de jouer un média sans connecter l'appel, de façon à jouer l'annonce à l'appelant sans connecter l'appel en évitant ainsi de le facturer. L'opérateur d'un réseau peut ainsi s'assurer qu'aucun appel en provenance d'un réseau tiers n'usurpe le numéro d'un de ses abonnés.

À l'étape 204, si le numéro appelant est valide, l'équipement de gestion route l'appel de façon classique vers le destinataire.

Selon une réalisation particulière de l'invention, l'équipement de gestion 107 de la figure 1 est adapté pour consulter une base de données 102 des abonnés du réseau 100. L'interrogation de la base de données 102 peut se faire directement ou par l'intermédiaire d'un équipement apte à relayer la demande de consultation vers la base de données, comme par exemple un SBC (Session Border Controller). Le procédé comporte alors une étape d'interrogation d'une base de données contenant les données de mise en relation relatives aux abonnés du réseau duquel est émis le message d'initiation de communication. Vient ensuite une étape d'interprétation de la réponse au message d'interrogation: lorsque la réponse au message d'interrogation de la base de donnée du réseau duquel la communication est initiée indique que le numéro appelant n'est pas le numéro d'un abonné à ce réseau, le numéro appelant est manifestement invalide et l'équipement de gestion du réseau destinataire implémentant l'invention peut rejeter la demande d'établissement de la communication.

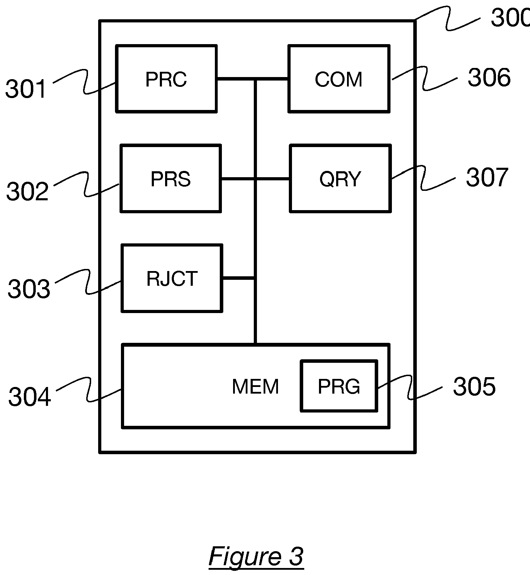

La figure 3 illustre l'architecture d'un dispositif 300 mettant en oeuvre le procédé de contrôle de l'authenticité d'une donnée de mise en relation selon un mode de réalisation de l'invention. Le dispositif comprend un espace de stockage 304, par exemple une mémoire MEM, une unité de traitement 301 équipée par exemple d'un processeur PROC. L'unité de traitement peut être pilotée par un programme 305, par exemple un programme d'ordinateur PGR, mettant en oeuvre le procédé de contrôle tel que décrit dans l'invention en référence aux figures 1 et 2, et notamment les étapes d'extraction (200) d'une donnée de mise en relation relative à l'initiateur d'une communication à partir d'un message d'établissement de la communication, de recherche (201) d'au moins une donnée de mise en relation dans au moins une base de données des données de mise en relation associées au domaine de destination, et de rejet (203) de la communication si une occurrence de la donnée de mise en relation est trouvée en base de données.

À l'initialisation, les instructions du programme d'ordinateur 305 sont par exemple chargées dans une mémoire RAM (Random Access Memory) avant d'être exécutées par le processeur de l'unité de traitement 301. Le processeur de l'unité de traitement 301 met en oeuvre les étapes du procédé selon les instructions du programme d'ordinateur 305. Pour cela, le dispositif comprend, outre la mémoire 304, des moyens d'extraction 302 (PARSE) d'au moins une donnée de mise en relation à partir d'un message d'établissement de communication, de recherche 307 (QUERY) d'au moins une

donnée de mise en relation dans au moins une base de données des données de mise en relation associées au domaine de destination de la communication, et de rejet 303 (REJECT) de la communication lorsqu'une occurrence de la une donnée de mise en relation est trouvée dans la base de données. Le dispositif comprend en outre des moyens de communications 306 (COM), comme par exemple une interface réseau, adaptés pour l'envoi et la réception de messages, et en particulier pour la réception d'un message d'établissement d'une communication et l'envoi de messages d'interrogation d'une base de données.

Selon un mode de réalisation, le dispositif peut être intégré dans un équipement de type serveur.

## Revendications

1. Equipement de gestion d'un premier domaine de télécommunication, -comprenant des moyens de réception de messages d'établissement de communication à destination d'au moins un abonné dudit premier domaine de télécommunication, ledit équipement de gestion comportant :
- des moyens d'extraction (200) d'au moins une première donnée de mise en relation désignant un initiateur d'une communication à établir avec au moins un abonné d'un premier domaine de télécommunication, dans un message d'établissement de ladite communication, reçu via une interconnexion entre ledit premier domaine de communication et un second domaine de télécommunication, autre que ledit premier domaine, ledit message provenant dudit second domaine et étant à destination d'au moins un abonné dudit premier domaine de télécommunication ;
ledit équipement de gestion étant **caractérisé en ce qu'**il comporte:
- des moyens de contrôle d'une authenticité de ladite au moins une première donnée de mise en relation extraite, ledit contrôle comprenant :
• une recherche de ladite première donnée de mise en relation extraite dans au moins une première base de données référençant les données de mise en relation des abonnés dudit premier domaine de télécommunication ;
• et, lorsqu'un abonné dudit premier domaine est trouvé dans ladite première base de données à partir de ladite donnée extraite, un rejet (203) de la communication

2. Procédé de contrôle d'une authenticité d'au moins une première donnée de mise en relation, désignant un initiateur d'une communication à établir avec au moins un abonné d'un premier domaine de télécommunication, dans un message d'établissement de ladite communication, ledit procédé étant mis en oeuvre par un équipement de gestion dudit premier domaine de télécommunication, le procédé comportant:
- Une extraction (200) à partir d'un message d'établissement de communication reçu via une interconnexion entre ledit premier domaine de communication et un second domaine de télécommunication, autre que ledit premier domaine, le message provenant dudit second domaine et étant à destination d'au moins un abonné dudit premier domaine de télécommunication, d'au moins une première donnée de mise en relation désignant un initiateur dudit message reçu,
le procédé étant **caractérisé en ce qu'**il comporte:
- un contrôle d'une authenticité de ladite au moins une première donnée de mise en relation extraite, ledit contrôle comprenant :
• une recherche de ladite première donnée de mise en relation extraite dans au moins une première base de données référençant les données de mise en relation des abonnés dudit premier domaine de télécommunication ;
• et lorsqu'un abonné dudit premier domaine est trouvé dans ladite première base de données à partir de ladite donnée extraite, un rejet (203) de la communication

3. Equipement de gestion selon la revendication 1, ledit équipement de gestion comprenant des moyens pour, ou procédé de contrôle d'une authenticité selon la revendication 2 comprenant,:
- Une émission d'un message d'interrogation vers un serveur dudit premier domaine associé à ladite première base de données;
- Une réception d'un message comprenant un code d'erreur, lorsqu'il n'a pas été trouvé dans ladite première base de données, de donnée de mise en relation d'un abonné dudit premier domaine correspondant à ladite donnée de mise en relation extraite.

4. Equipement de gestion selon la revendication 1 ou 3, ou procédé de contrôle d'une authenticité selon la revendication 2 ou 3, où ledit premier domaine est défini par un réseau de type IP Multimedia Subsystem, IMS, et ledit serveur est un Home Subscriber Server, HSS, dudit premier domaine.

5. Equipement de gestion selon la revendication 3 ou 4, ou procédé de contrôle d'une authenticité selon la revendication 3 ou 4, où ledit message d'interrogation est un message de type Location Information Request, LIR, selon le protocole « Diameter ».

6. Equipement de gestion selon au moins une des revendication 1 ou 3 à 5, où lesdits moyens de contrôle d'une authenticité comprennent en outre des moyens pour, ou procédé de contrôle d'une authenticité selon au moins une des revendication 2 à 5 où ledit contrôle de l'authenticité de ladite au moins une première donnée de mise en relation comporte en outre :
• une recherche de ladite première donnée de mise en relation extraite dans au moins une seconde base de données référençant les données de mise en relation des abonnés dudit second domaine de télécommunication,
• et lorsqu'aucune des données de mise en relation de ladite seconde base de données ne correspond à ladite donnée de mise de relation extraite, un rejet de ladite communication.

7. Equipement de gestion selon au moins une des revendication 1 ou 3 à 6, ledit équipement de gestion comprenant des moyens pour, ou procédé de contrôle d'une authenticité selon au moins une des revendication 2 à 6 comprenant :
• Un routage dudit message d'établissement de communication vers ledit abonné destinataire dudit message d'établissement d'appel lorsqu'aucune des données de mise en relation de ladite première base de données ne correspond à ladite donnée de mise de relation extraite et/ou lorsqu'un abonné dudit premier domaine est trouvé dans ladite seconde base de données à partir de ladite donnée extraite.

8. Equipement de gestion selon au moins une des revendication 1 ou 3 à 7, ou procédé de contrôle d'une authenticité selon au moins une des revendication 2 à 7, où ledit rejet comprend, en réponse audit message d'établissement, une émission d'un message comportant un code d'erreur.

9. Equipement de gestion selon la revendication 8, ou procédé de contrôle d'une authenticité selon la revendication 8, où ledit code d'erreur est un code d'erreur « 404 Not found » du protocole Session Initiation Protocol, SIP.

10. Equipement de gestion selon au moins une des revendication 1 ou 3 à 9, ou procédé de contrôle d'une authenticité selon au moins une des revendication 2 à 9, où ledit rejet met en oeuvre, en réponse audit message d'établissement, une fonctionnalité permettant de jouer une annonce vocale à l'initiateur de ladite communication à établir sans établir ladite communication.

11. Equipement de gestion selon la revendication 10, ou procédé de contrôle d'une authenticité selon la revendication 10, où ladite fonctionnalité est une fonctionnalité du protocole SIP dite « early média ».

12. Equipement de gestion selon au moins une des revendication 1 ou 3 à 11, ou procédé selon l'une des revendications 2 à 11, où la première donnée de mise en relation comporte au moins une donnée de l'un des types suivants:
• Un numéro de téléphone,
• Une adresse de courrier électronique,
• Une adresse de contact sur Internet, ou
• Un identifiant de communication.

13. Equipement de gestion selon au moins une des revendications 1 ou 3 à 12, ou procédé de contrôle au moins une des revendications 2 à 12, où ledit équipement de gestion est un équipement parmi les équipements de gestion de réseaux suivants :
- Un commutateur d'un réseau de type Réseau Téléphonique Commuté, RTC;
- Un Mail Transport Agent, MTA, dans le cas d'une messagerie de type email ;
- Un Interrogating Call Session Control Function, I-CSCF, d'un réseau IMS ;
- un Interconnection Session Border Controller, I-SBC, d'un réseau IMS ;
- un Call Server Session Initiation Protocol, SIP, d'un réseau IMS.

14. Programme d'ordinateur comportant les instructions pour l'exécution du procédé selon l'une quelconque des revendications 2 à 13, lorsque le programme est exécuté par un processeur.

15. Support d'enregistrement lisible par un ordinateur sur lequel est enregistré un programme d'ordinateur comprenant des instructions pour l'exécution des étapes du procédé de contrôle selon l'une quelconque des revendications 2 à 13.

## Patentansprüche

1. Verwaltungseinrichtung einer ersten Telekommunikationsdomäne, umfassend Mittel zum Empfangen von Verbindungsaufbaunachrichten, die an mindestens einen Teilnehmer der ersten Telekommunikationsdomäne gerichtet sind, wobei die Verwaltungseinrichtung umfasst:
- Mittel zum Extrahieren (200) mindestens eines ersten Kontaktdatenelements, das einen Initiator einer zu mindestens einem Teilnehmer einer ersten Telekommunikationsdomäne aufzubauenden Verbindung bezeichnet, in einer Aufbaunachricht der Verbindung, die über eine Zusammenschaltung zwischen der ersten Kommunikationsdomäne und einer zweiten Telekommunikationsdomäne, die eine andere als die erste Domäne ist, empfangen wird, wobei die Nachricht von der zweiten Domäne kommt und an mindestens einen Teilnehmer der ersten Telekommunikationsdomäne gerichtet ist; wobei die Verwaltungseinrichtung **dadurch gekennzeichnet ist, dass** sie umfasst:
- Mittel zum Prüfen einer Echtheit des mindestens einen extrahierten ersten Kontaktdatenelements, wobei das Prüfen umfasst:
· ein Suchen des extrahierten ersten Kontaktdatenelements in mindestens einer ersten Datenbank, die die Kontaktdaten der Teilnehmer der ersten Telekommunikationsdomäne verzeichnet;
· und, wenn ein Teilnehmer der ersten Domäne in der ersten Datenbank anhand des extrahierten Datenelements gefunden wird, ein Zurückweisen (203) der Verbindung.

2. Verfahren zum Prüfen einer Echtheit mindestens eines ersten Kontaktdatenelements, das einen Initiator einer zu mindestens einem Teilnehmer einer ersten Telekommunikationsdomäne aufzubauenden Verbindung bezeichnet, in einer Aufbaunachricht der Verbindung, wobei das Verfahren von einer Verwaltungseinrichtung der ersten Telekommunikationsdomäne ausgeführt wird, wobei das Verfahren umfasst:
- ein Extrahieren (200), ausgehend von einer Verbindungsaufbaunachricht, die über eine Zusammenschaltung zwischen der ersten Kommunikationsdomäne und einer zweiten Telekommunikationsdomäne empfangen wird, die eine andere als die erste Domäne ist, wobei die Nachricht von der zweiten Domäne kommt und an mindestens einen Teilnehmer der ersten Telekommunikationsdomäne gerichtet ist, mindestens eines ersten Kontaktdatenelements, das einen Initiator der empfangenen Nachricht bezeichnet,
wobei das Verfahren **dadurch gekennzeichnet ist, dass** es umfasst:
- ein Prüfen einer Echtheit des mindestens einen extrahierten ersten Kontaktdatenelements, wobei das Prüfen umfasst:
· ein Suchen des extrahierten ersten Kontaktdatenelements in mindestens einer ersten Datenbank, die die Kontaktdaten der Teilnehmer der ersten Telekommunikationsdomäne verzeichnet;
· und, wenn ein Teilnehmer der ersten Domäne in der ersten Datenbank anhand des extrahierten Datenelements gefunden wird, ein Zurückweisen (203) der Verbindung.

3. Verwaltungseinrichtung nach Anspruch 1, wobei die Verwaltungseinrichtung Mittel oder ein Verfahren zum Prüfen einer Echtheit nach Anspruch 2 umfasst, umfassend:
- ein Senden einer Abfragenachricht an einen Server der ersten Domäne, die der ersten Datenbank zugeordnet ist;
- ein Empfangen einer Nachricht, die einen Fehlercode enthält, wenn in der ersten Datenbank kein Kontaktdatenelement eines Teilnehmers der ersten Domäne gefunden wurde, das dem extrahierten Kontaktdatenelement entspricht.

4. Verwaltungseinrichtung nach Anspruch 1 oder 3 oder Verfahren zum Prüfen einer Echtheit nach Anspruch 2 oder 3, wobei die erste Domäne durch ein Netz vom Typ IP Multimedia Subsystem, IMS, definiert ist und der Server ein Home Subscriber Server, HSS, der ersten Domäne ist.

5. Verwaltungseinrichtung nach Anspruch 3 oder 4 oder Verfahren zum Prüfen einer Echtheit nach Anspruch 3 oder 4, wobei die Abfragenachricht eine Nachricht vom Typ Location Information Request, LIR, nach dem Protokoll "Diameter" ist.

6. Verwaltungseinrichtung nach mindestens einem der Ansprüche 1 oder 3 bis 5, wobei die Mittel zum Prüfen einer Echtheit ferner Mittel oder ein Verfahren zum Prüfen einer Echtheit nach mindestens einem der Ansprüche 2 bis 5 umfassen, wobei das Prüfen der Echtheit des mindestens einen ersten Kontaktdatenelements ferner umfasst:
· ein Suchen des extrahierten ersten Kontaktdatenelements in mindestens einer zweiten Datenbank, die die Kontaktdaten der Teilnehmer der zweiten Telekommunikationsdomäne verzeichnet;
· und wenn keines der Kontaktdatenelemente der zweiten Datenbank dem extrahierten Kontaktdatenelement entspricht, ein Zurückweisen der Verbindung.

7. Verwaltungseinrichtung nach mindestens einem der Ansprüche 1 oder 3 bis 6, wobei die Verwaltungseinrichtung Mittel umfasst zum, oder Verfahren zum Prüfen einer Echtheit nach mindestens einem der Ansprüche 2 bis 6, umfassend ein:
· Routen der Verbindungsaufbaunachricht zu dem Teilnehmer, welcher der Empfänger der Verbindungsaufbaunachricht ist, wenn keines der Kontaktdatenelemente der ersten Datenbank dem extrahierten Kontaktdatenelement entspricht und/oder wenn ein Teilnehmer der ersten Domäne in der zweiten Datenbank anhand des extrahierten Datenelements gefunden wird.

8. Verwaltungseinrichtung nach mindestens einem der Ansprüche 1 oder 3 bis 7 oder Verfahren zum Prüfen einer Echtheit nach mindestens einem der Ansprüche 2 bis 7, wobei die Zurückweisung, als Antwort auf die Aufbaunachricht, ein Senden einer Nachricht umfasst, die einen Fehlercode enthält.

9. Verwaltungseinrichtung nach Anspruch 8 oder Verfahren zum Prüfen einer Echtheit nach Anspruch 8, wobei der Fehlercode ein Fehlercode "404 Not found" des Protokolls Session Initiation Protocol, SIP, ist.

10. Verwaltungseinrichtung nach mindestens einem der Ansprüche 1 oder 3 bis 9 oder Verfahren zum Prüfen einer Echtheit nach mindestens einem der Ansprüche 2 bis 9, wobei die Zurückweisung, als Antwort auf die Aufbaunachricht, eine Funktionalität ausführt, die es ermöglicht, eine Sprachansage an den Initiator der aufzubauenden Verbindung abzuspielen, ohne die Verbindung aufzubauen.

11. Verwaltungseinrichtung nach Anspruch 10 oder Verfahren zum Prüfen einer Echtheit nach Anspruch 10, wobei die Funktionalität eine Funktionalität des Protokolls SIP ist, die als "early media" bezeichnet wird.

12. Verwaltungseinrichtung nach mindestens einem der Ansprüche 1 oder 3 bis 11 oder Verfahren nach einem der Ansprüche 2 bis 11, wobei das erste Kontaktdatenelement mindestens ein Datenelement eines der folgenden Typen enthält:
· eine Telefonnummer,
· eine E-Mail-Adresse,
· eine Internet-Kontaktadresse oder
· eine Verbindungskennung.

13. Verwaltungseinrichtung nach mindestens einem der Ansprüche 1 oder 3 bis 12 oder Verfahren zum Prüfen nach mindestens einem der Ansprüche 2 bis 12, wobei die Verwaltungseinrichtung eine Einrichtung unter den folgenden Netzverwaltungseinrichtungen ist:
- eine Vermittlungseinrichtung eines Netzes vom Typ vermitteltes Fernsprechnetz, RTC;
- ein Mail Transport Agent, MTA, im Fall eines Mitteilungsdienstes vom Typ E-Mail;
- eine Interrogating Call Session Control Function, I-CSCF eines IMS-Netzes;
- ein Interconnection Session Border Controller, I-SBC, eines IMS-Netzes;
- ein Call Server Session Initiation Protocol, SIP, eines IMS-Netzes.

14. Computerprogramm, das die Anweisungen umfasst, die bei der Ausführung des Programms durch einen Prozessor das Verfahren nach einem der Ansprüche 2 bis 13 ausführen.

15. Computerlesbares Speichermedium, auf dem ein Computerprogramm gespeichert ist, das Anweisungen zur Ausführung der Schritte des Verfahrens zum Prüfen nach einem der Ansprüche 2 bis 13 umfasst.

## Claims

1. Management equipment for managing a first telecommunication domain, comprising means for receiving communication set-up messages intended for at least one subscriber of said first telecommunication domain, said management equipment comprising:
- means (200) for extracting at least a first connection datum designating an originator of a communication to be set up with at least one subscriber of a first telecommunication domain, in a set-up message of said communication, said message being received via an interconnection between said first communication domain and a second telecommunication domain other than said first domain, said message originating from said second domain and being intended for at least one subscriber of said first telecommunication domain;
said management equipment being **characterized in that** it comprises:
- means for carrying out a check of an authenticity of said at least one extracted first connection datum, said check comprising:
· searching for said extracted first connection datum in at least a first database listing the connection data of the subscribers of said first telecommunication domain;
· and, when a subscriber of said first domain is found in said first database as a result of said extracted datum, rejecting (203) the communication.

2. Method for checking an authenticity of at least a first connection datum, designating an originator of a communication to be set up with at least one subscriber of a first telecommunication domain, in a set-up message of said communication, said method being implemented by management equipment of said first telecommunication domain, the method comprising:
- extracting (200), from a communication set-up message received via an interconnection between said first communication domain and a second telecommunication domain other than said first domain, the message originating from said second domain and being intended for at least one subscriber of said first telecommunication domain, at least a first connection datum designating an originator of said received message, the method being **characterized in that** it comprises:
- carrying out a check of an authenticity of said at least one extracted first connection datum, said check comprising:
• searching for said extracted first connection datum in at least a first database listing the connection data of the subscribers of said first telecommunication domain;
• and when a subscriber of said first domain is found in said first database as a result of said extracted datum, rejecting (203) the communication.

3. Management equipment according to Claim 1, said management equipment comprising means for, or method for checking an authenticity according to Claim 2 comprising:
- sending a query message to a server of said first domain associated with said first database;
- receiving a message containing an error code, when no connection datum of a subscriber of said first domain corresponding to said extracted connection datum is found in said first database.

4. Management equipment according to Claim 1 or 3, or method for checking an authenticity according to Claim 2 or 3, wherein said first domain is defined by an IP Multimedia Subsystem, IMS, network, and said server is an Home Subscriber Server, HSS, of said first domain.

5. Management equipment according to Claim 3 or 4, or method for checking an authenticity according to Claim 3 or 4, wherein said query message is an Location Information Request, LIR, message according to the Diameter protocol.

6. Management equipment according to at least one of Claims 1 or 3 to 5, wherein said means for checking an authenticity further comprise means for, or method for checking an authenticity according to at least one of Claims 2 to 5, wherein said check of the authenticity of said at least one first connection datum further comprises:
· searching for said extracted first connection datum in at least a second database listing the connection data of the subscribers of said second telecommunication domain,
· and when none of the connection data of said second database corresponds to said extracted connection datum, rejecting said communication.

7. Management equipment according to at least one of Claims 1 or 3 to 6 wherein said management equipment comprises means for, or method for checking an authenticity according to at least one of Claims 2 to 6 comprising:
· routing said communication set-up message to said subscriber intended to receive said call set-up message when none of the connection data of said first database corresponds to said extracted connection datum and/or when a subscriber of said first domain is found in said second database as a result of said extracted datum.

8. Management equipment according to at least one of Claims 1 or 3 to 7, or method for checking an authenticity according to at least one of Claims 2 to 7, wherein said rejecting comprises, in response to said set-up message, sending a message containing an error code.

9. Management equipment according to Claim 8, or method for checking an authenticity according to Claim 8, wherein said error code is a "404 not found" error code of the Standing for Session Initiation Protocol, SIP.

10. Management equipment according to at least one of Claims 1 or 3 to 9, or method for checking an authenticity according to at least one of Claims 2 to 9, wherein said rejecting implements, in response to said set-up message, a functionality allowing a voice announcement to be played to the originator of said communication to be set up without setting up said communication.

11. Management equipment according to Claim 10, or method for checking an authenticity according to Claim 10, wherein said functionality is a so-called "early media" functionality of the SIP protocol.

12. Management equipment according to at least one of Claims 1 or 3 to 11, or method according to one of Claims 2 to 11, wherein the first connection datum comprises at least one datum of one of the following types:
· a telephone number,
· an e-mail address,
· a contact address on the Internet, or
· a communication identifier.

13. Management equipment according to at least one of Claims 1 or 3 to 12, or checking method according to at least one of Claims 2 to 12, wherein said management equipment is an equipment among the following network management equipment:
- a switch of a switched telephone network, RTC ;
- a Mail Transport Agent, MTA, in the case of e-mail;
- an Interrogating Call Session Control Function, I-CSCF, of an IMS network;
- an Interconnection Session Border Controller, I-SBC, of an IMS network;
- a Session Initiation Protocol, SIP, call server, of an IMS network.

14. Computer program comprising instructions for executing the method according to any one of Claims 2 to 13, when the program is executed by a processor.

15. Computer-readable storage medium on which is stored a computer program comprising instructions for executing the steps of the checking method according to any one of Claims 2 to 13.
